Europäisches Patentamt

European Patent Office

Office européen des brevets

(19)

(11) Numéro de publication: **0 234 140**
**B1**

(12) # FASCICULE DE BREVET EUROPEEN

(45) Date de publication du fascicule du brevet:
**18.07.90**

(51) Int. Cl.⁵: **B23B 51/08**, B23Q 1/16,
B23B 39/16

(21) Numéro de dépôt: **86402532.5**

(22) Date de dépôt: **14.11.86**

(54) Dispositif de nettoyage des trous d'anodes utilisées dans l'industrie de l'aluminium.

(30) Priorité: **29.11.85 FR 8517648**

(43) Date de publication de la demande:
**02.09.87 Bulletin 87/36**

(45) Mention de la délivrance du brevet:
**18.07.90 Bulletin 90/29**

(84) Etats contractants désignés:
**AT CH DE ES GB GR IT LI NL SE**

(56) Documents cités:
**DE-A- 3 143 847**
**DE-A- 3 322 007**
**DE-C- 540 424**
**DE-U- 8 506 915**

(73) Titulaire: **SYPRIM AIR INDUSTRIE ENVIRONNEMENT,**
**27-31 Boulevard de la Paix, F-78100 Saint Germain en**
**Laye(FR)**

(72) Inventeur: **Mercadie, Claude, 1, rue de l'Abreuvoir,**
**F-78630 Orgeval(FR)**
Inventeur: **Bossant, André, 15, rue de Lille,**
**F-93160 Noisy Le Grand(FR)**
Inventeur: **Thebault, Bernard, Village No 11 L'Habit,**
**F-27220 Saint André de L'Heure(FR)**

(74) Mandataire: **Fontanié, Etienne, FIVES-CAIL**
**BABCOCK 38, rue de la République, F-93107 Montreuil**
**Cédex(FR)**

## Description

Dans les usines productrices d'aluminium le processus électrolytique d'élaboration du métal provoque une usure continue de l'élément anodique. Cet élément anodique est enlevé des cuves d'électrolyse lorsque son usure est maximum et envoyé dans un atelier qui assure sa rénovation. Pour cela, la tige de connexion, qui est conservée, est séparée de la partie restante de l'anode en carbone et une nouvelle anode y est fixée.

La fabrication des anodes est assurée près des halles d'électrolyse, et des stockages sont prévus de façon à assurer l'alimentation régulière des cuves qui doivent fonctionner en continu.

Les anodes sont constituées d'une pâte à base de brai et de coke de pétrole. Elles sont moulées par vibration à partir de pâte chaude et, après refroidissement, elles sont envoyées en cuisson dans des fours à chambres où la conductibilité thermique entre les parois du four et les anodes est assurée par du coke métallurgique en grains.

Après la cuisson, lorsque les anodes sont défournées, les grains de coke restent collés sur les faces de l'anode et dans les trous placés sur le dessus de l'anode et servant à la fixation des tiges de connexion. Il est donc nécessaire de soumettre les anodes à un ensemble d'opérations de nettoyage.

Les solutions connues pour nettoyer les anodes consistent à gratter leurs faces au moyen d'un machine spécialement conçue et à expulser les grains de coke se trouvant dans les trous au moyen d'un canon à air. Mais cette dernière opération ne permet pas de détacher les grains collés par le brai liquide, pendant la cuisson, sur la paroi des trous et plus particulièrement dans les rainures hélicoïdales qui y sont prévues pour augmenter la surface de liaison entre la tige et l'anode et accroître la résistance mécanique entre ces deux éléments. Il est donc nécessaire de terminer manuellement l'opération de nettoyage des trous au moyen d'outils plus ou moins adaptés ce qui entraine une diminution de la productivité et une augmentation de la pollution.

Le but de la présente invention est de fournir un dispositif assurant un nettoyage complet par grattage de la paroi des trous y compris de l'intérieur des rainures.

On connait (DE-U 8 506 915) un outil pour le perçage de trous à section non circulaire constitué par un foret dont la tête a un diamètre supérieur à celui du corps sur lequel est montée une douille qui peut coulisser le long du foret et tourner par rapport à celui-ci. L'extrémité, taillée en biseau, de cette douille consititue une tête de travail dont la section correspond à celle du trou à percer et qui est appliquée par un ressort contre une surface inclinée prévue à l'arrière de la tête du foret lorsque l'outil est inutilisé ou en début de perçage, tant que la rotation de la douille n'est par freinée. Lorsque, pendant le perçage, l'extrémité de la douille vient en contact avec la surface à percer, sa rotation est interrompue et la surface inclinée de la tête du foret agit comme une came pour repousser la douille vers l'arrière pendant un demi-tour, tandis que le ressort ramène la douille vers l'avant pendant le demi-tour suivant. La douille effectue ainsi un mouvement de va-et-vient et sa tête vient frapper la surface à percer à chaque tour du foret ce qui lui permet de pénétrer progressivement dans ladite surface.

Cet outil qui est conçu pour percer des trous de petites dimensions ne peut pas être utilisé pour le nettoyage des trous des grosses anodes en carbone concernées par la présente invention, notamment parce que le mouvement de va-et-vient de la douille et les chocs répétés en résultant détérioreraient l'entrée du trou et des rainures.

La présente invention a pour objet un dispositif de nettoyage des trous rainurés d'une anode en carbone comprenant une tête de travail formée d'un premier élément constitué par une lame fixée à l'extrémité d'un arbre rotatif, d'un second élément monté rotatif sur l'arbre et portant à son extrémité une série d'outils, et d'un accouplement entre les premier et second éléments conçu pour permettre une rotation relative desdits éléments seulement lorsque le couple résistant exercé sur le second élément devient supérieur à une valeur prédéterminée, des moyens pour entraîner ledit arbre en rotation et des moyens pour déplacer la tête de travail parallèlement à l'axe du trou, caractérisé en ce que ladite lame est destinée à gratter la surface périphérique et le fond du trou, en ce que le second élément est constitué par une pièce en forme de cloche dont l'extrémité qui porte lesdits outils destinés à gratter les parois des rainures de trou est adjacente à ladite lame, de telle sorte que lesdits outils sont situés pratiquement au même niveau que ladite lame, et en ce que ladite pièce en forme de cloche est bloquée axialement sur l'arbre, de telle sorte que ladite pièce et ledit arbre sont solidaires en translation axiale.

Suivant un mode de réalisation particulier, ledit accouplement est formé de deux dentures à dents de scie, dont l'une est fixée sur ladite cloche et l'autre est fixée sur un disque claveté sur ledit arbre de façon à pouvoir se déplacer longitudinalement sur celui-ci, et des ressorts appliquent normalement les deux dentures l'une sur l'autre et autorisent un glissement relatif des dentures lorsque le couple résistant s'exerçant sur le second élément excède ladite valeur prédéterminée.

Les grains de coke se trouvant dans le trou seront avantageusement évacués pneumatiquement en utilisant un arbre creux, ouvert à ses deux extrémités et relié à un dispositif d'aspiration. L'extrémité de l'arbre portant la lame pourra comporter dans sa paroi des ouvertures ou des échancrures facilitant l'aspiration des grains notamment lorsque la lame approche du fond du trou. La paroi de la cloche pourra aussi être percée de trous pour aspirer les grains contenus dans les rainures. La tête de travail pourra être équipée d'un système de broyage des grains de coke agglomérés.

Pour faciliter l'introduction de la tête de travail dans le trou l'arbre sera monté sur son support par l'intermédiaire de moyens élastiques autorisant des déplacements transversaux de l'arbre. Suivant une réalisation préférée, l'arbre est supporté près de son extrémité opposée à celle portant la tête de travail par un palier à rotule et près de l'extrémité portant la tête de travail par un palier fixé audit support par l'intermédiaire de blocs de caoutchouc du type silent-bloc.

L'arbre sera entraîné en rotation par tout moyen approprié. On pourra, par exemple utiliser un groupe motoréducteur "flottant" monté sur l'arbre et lié au support par des moyens de reprise du couple.

Le dispositif de l'invention peut comporter une ou plusieurs têtes de travail supportées soit par un portique ou une potence surplombant le transporteur amenant les anodes au poste de nettoyage, si celles-ci se présentent avec les trous sur le dessus, soit par un bâti disposé latéralement au transporteur, si les anodes se présentent avec les trous sur le côté. Chaque tête sera portée par un support individuel qui lui-même sera monté sur le portique ou le bâti de façon à pouvoir être déplacé verticalement ou horizontalement, respectivement, par un moyen approprié. Les supports pourront, par exemple, être montés sur des rails ou des glissières verticaux ou horizontaux. Pour déplacer les têtes de travail, il sera avantageux d'utiliser des vérins pneumatiques qui permettent d'adapter automatiquement la vitesse de pénétration des têtes dans les trous à la résistance rencontrée par ces têtes.

Le fonctionnement du dispositif de l'invention peut être entièrement automatisé. Dans ce cas, avec un dispositif comportant autant de têtes de travail que de trous dans une anode, celle-ci sera amenée par le transporteur et arrêtée dans une position telle que les axes des trous soient alignés avec les axes des têtes. Cette opération sera réalisée au moyen de guides longitudinaux assurant le positionnement latéral de l'anode et d'interrupteurs de fin de course ou de détecteurs de proximité assurant son positionnement longitudinal. Les têtes de travail seront ensuite descendues dans les trous et lorsqu'elles en atteindront le fond, des interrupteurs de fin de course commanderont leur relevage. D'autres interrupteurs de fin de course commanderont alors la mise en route du transporteur qui transportera l'anode nettoyée au poste de travail suivant et amènera une autre anode au poste de nettoyage. Des moyens de réglage seront prévus pour adapter l'écartement des têtes de travail à l'écartement des trous pour différents types d'anodes.

D'autres caractéristiques de l'invention seront mises en évidence par la description qui suit et se réfère aux dessins l'accompagnant qui montrent, à titre d'exemple non limitatif, un mode de réalisation de l'invention et sur lesquels:

La figure 1 est une vue en élévation d'un dispositif de nettoyage des trous d'anodes réalisé conformément à l'invention, certaines parties étant représentées en coupe;

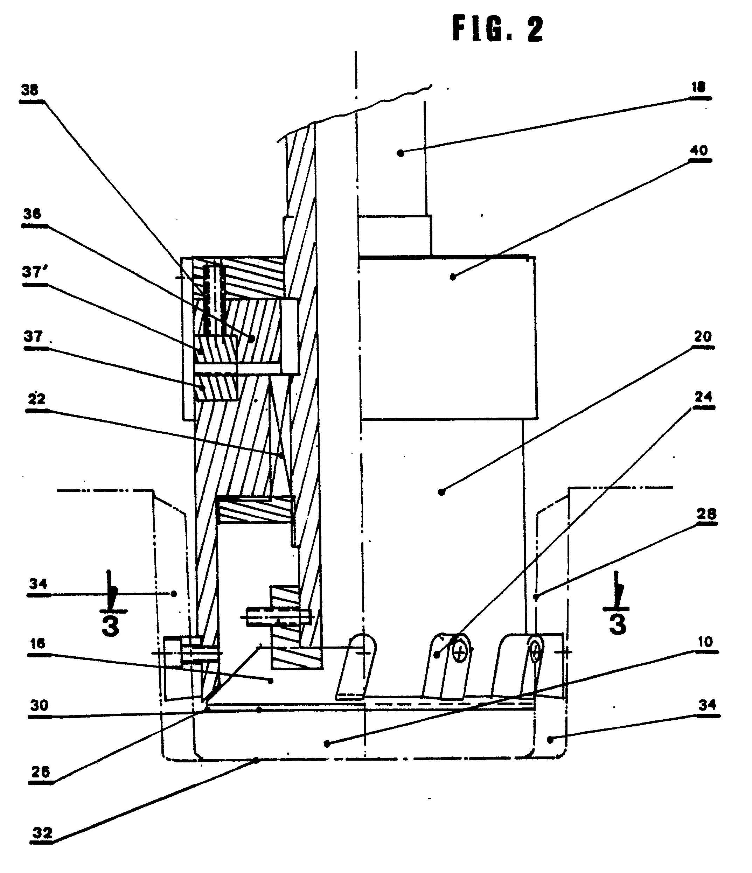

La figure 2 est une vue à plus grande échelle, partiellement en coupe et partiellement en élévation, de la tête de travail du dispositif de la figure 1;

La figure 3 est une coupe suivant la ligne 3-3 de la figure 2; et

La figure 4 est une coupe verticale d'une autre tête de travail adaptable au dispositif de l'invention.

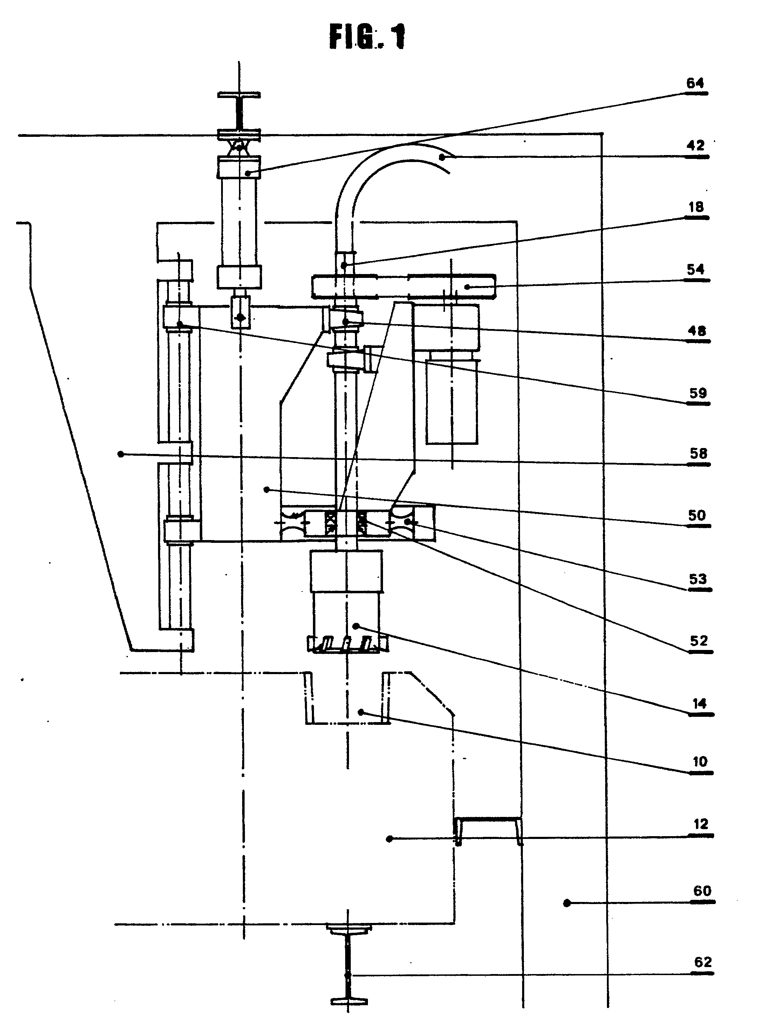

Le dispositif représenté sur la figure 1 est destiné au nettoyage des trous 10 d'une anode 12 comportant deux rangées longitudinales de trous, par exemple 6 trous, formés sur la face supérieure de l'anode et comprend autant de têtes de travail 14 que de trous. Pour la clarté du dessin, une seule tête de travail a été représentée.

Chaque tête de travail est formée de deux éléments: un premier élément constitué par deux lames 16 fixées à l'extrémité inférieure d'un arbre vertical creux 18, et un second élément constitué par une cloche 20 montée rotative, par l'intermédiaire d'un roulement à aiguilles 22, sur l'arbre 18 dont elle est solidaire axialement, et portant sur sa périphérie, à son extrémité inférieure, une série d'outils de forme 24.

Les lames 16 comportent à leur extrémité une arête de coupe 26 qui vient gratter la surface périphérique 28 du trou lorsque la tête de travail y est introduite, l'arbre 18 étant en rotation; elles comportent également une arête de coupe inférieure 30 qui vient gratter le fond 32 du trou.

Le nombre et la disposition des outils 24 sur la cloche 20 correspondent à ceux des rainures hélicoïdales 34 formées sur la surface périphérique du trou, et leur section correspond sensiblement à celle des rainures, de sorte que lorsque la tête de travail descend dans le trou, les outils 24 sont déplacés dans les rainures en grattant le fond et les bords de ces dernières. Le diamètre extérieur de la cloche 20 est légèrement inférieur au diamètre du trou et un jeu faible mais suffisant pour permettre la rotation relative des premier et second éléments est ménagé entre les lames et le bord inférieur de la cloche.

Un disque 36 disposé au-dessus de la cloche 20 est claveté sur l'arbre 18 de façon à pouvoir coulisser longitudinalement sur ce dernier. Les faces en regard de la cloche 20 et du disque 36 portent des dentures coopérantes, à dents de scie, 37, 37', qui sont appliquées l'une sur l'autre par des ressorts 38 comprimés entre le disque 36 et le fond d'une coiffe 40 solidaire de l'arbre 18. L'accouplement ainsi réalisé autorise la cloche 20 à tourner à une vitesse inférieure à celle de l'arbre 18, lorsque le couple résistant s'exerçant sur elle excède une valeur prédéterminée. Les dents de scie 37 et 37' glissent alors les unes sur les autres ce qui provoque alternativement, un déplacement vers le haut, puis une chute brusque du disque 36 qui soumet la cloche à une série de coups verticaux.

L'extrémité supérieure de l'arbre 18 est reliée par un tuyau souple 42 à l'aspiration d'un ventilateur ; les grains se trouvant dans le trou sont ainsi aspirés par le ventilateur à travers l'arbre creux, lorsque la tête de travail est descendue dans le trou. Pour faciliter l'évacuation des grains, notamment lorsque la tête de travail approche du fond du trou, des trous ou des échancrures peuvent être prévues à l'extrémité inférieure de l'arbre creux. Des orifices peuvent aussi être percés dans la paroi de la cloche 20, près des outils 24 pour faciliter l'évacuation des grains hors des rainures 34.

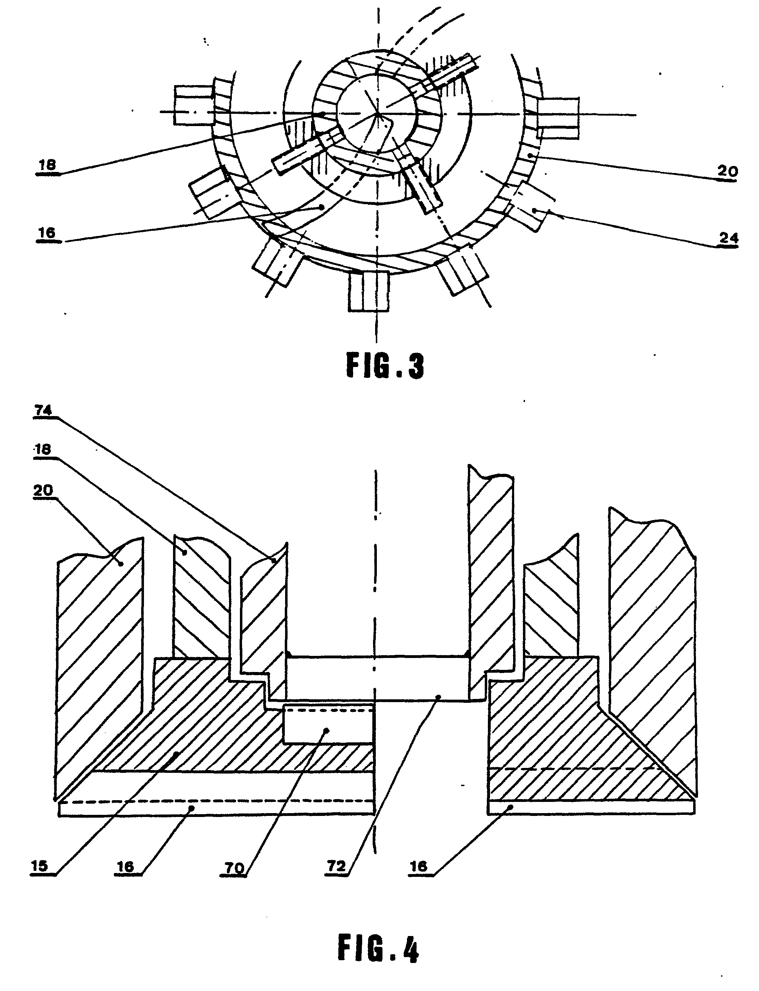

Dans la forme de réalisation représentée sur la figure 4, la pièce 15, solidaire de l'arbre 18, sur laquelle sont fixées les lames 16 porte une lame 70 dont le bord supérieur est disposée dans un plan perpendiculaire à l'axe de l'arbre 18. Une lame 72 dont le bord inférieur est parallèle audit plan et situé à faible distance de celui-ci est montée à l'extrémité inférieure d'un tube fixe 74 placé à l'intérieur de l'arbre 18. L'aspiration des grains de coke se fait dans ce cas à travers le tube 74 et la lame rotative 70 coopère avecla lame fixe 72 pour briser les agglomérats qui risqueraient de rester coincés dans le tube.

L'arbre 18 est supporté près de son extrémité supérieure par un palier sphérique 48 solidaire d'un chassis 50 et près de son extrémité inférieure par un palier 52 fixé par l'intermédiaire de blocs de caoutchouc du type silent-blocs 53 sur une couronne solidaire dudit chassis. Grâce à ce montage, l'arbre 18 peut s'écarter de sa position verticale, en pivotant autour du centre du palier 48, et la tête de travail peut être introduite dans le trou même si leurs axes ne sont pas exactement alignés.

L'arbre 18 est entrainé en rotation par un groupe moto-réducteur 54 monté sur l'arbre.

Le châssis 50 est guidé par des manchons à billes 59 ou d'autres moyens classiques, le long d'une colonne verticale portée par une poutre 58 fixée par son extrémité supérieure à la traverse d'un portique 60 chevauchant le transporteur 62 portant l'anode 12.

Les déplacements verticaux de l'unité qui vient d'être décrite sont commandés par un vérin pneumatique 64 accroché à la traverse du portique ou à la poutre 58. Comme on l'a expliqué plus haut, il y a autant d'unités que de trous dans une anode, chacune d'elle étant déplaçable sur une colonne verticale, de telle sorte que les écartements des têtes de travail correspondent aux écartements des trous de l'anode; ces unités sont déplaçables verticalement par des vérins tels que le vérin 64.

Le fonctionnement du dispositif décrit est entièrement automatique. L'anode 12 est amenée sous les têtes de travail par le transporteur 62. Elle est positionnée transversalement par des guides latéraux réglables et longitudinalement par des interrupteurs de fin de course ou des détecteurs de proximité qui arrêtent le transporteur lorsque les axes des trous sont alignés avec les axes des têtes de travail. Ces interrupteurs ou détecteurs commandent aussi, éventuellement avec des temporisations, les vérins 64, les moteurs 54 et le ventilateur d'aspiration auquel sont raccordés les tuyaux 42. Les vérins 64 font descendre les têtes de travail qui sont entraînées en rotation par les moteurs 54. Initialement, la cloche 20 de chaque tête tourne à la même vitesse que l'arbre 18. Dès que les outils 24 entrent en contact avec le bord du trou, la cloche 20 est freinée. Si les outils 24 se trouvent alors en face de l'ouverture des rainures 34, ils s'engagent dans celle-ci et la cloche 20 s'arrête de tourner; cela est rendu possible par l'accouplement 37-37'. Si ce n'est pas le cas, la cloche continue à tourner jusqu'à ce que cette condition soit réalisée. La tête de travail peut alors pénétrer dans le trou. Pendant leur descente les lames 16 grattent la surface périphérique 28 des trous 10 et les outils 24 grattent les bords et le fond des rainures 34. La rotation relative des dentures 37 et 37' engendre des chocs qui facilitent la descente des outils 24 dans les rainures 34. Lorsque les têtes de travail arrivent en fin de course, les lames 16 grattent le fond des trous. Des interrupteurs de fin de course commandent, au bout d'un temps prédéterminé, le relevage des têtes de travail. Lorsque celles-ci sont entièrement dégagées des trous, d'autres interrupteurs de fin de course commandent la mise en route du transporteur 62 pour évacuer l'anode nettoyée et amener une nouvelle anode sous les têtes de travail.

Pour adapter les positions des têtes de travail aux différentes dispositions des trous sur les anodes, les poutres 58 peuvent être montées de façon réglable sur le portique. Une autre solution consiste à prévoir pour chaque type d'anode un chassis constitué par un cadre auquel sont fixées des poutres verticales, analogues aux poutres 58 et dont le nombre et la disposition correspondent à ceux des trous de ce type d'anode, ce chassis étant fixé de manière amovible sur le portique. Pour passer d'un type d'anodes à un autre, on démonte les différentes unités, on remplace le chassis en place par un nouveau chassis adapté au nouveau type d'anodes et on monte les différentes unités sur les poutres verticales de ce nouveau chassis.

En variante, on pourra prévoir un nombre de têtes de travail inférieur au nombre de trous. Par exemple, dans le cas d'une anode à deux rangées de 3 trous, on pourra seulement prévoir deux têtes de travail disposées audessus des deux rangées de trous. Il faudra alors effectuer 3 fois les mêmes opérations pour nettoyer les 6 trous de l'anode, en la faisant avancer d'une distance égale à l'écartement des trous dans une rangée pour passer d'une paire de trous à la suivante.

D'autres modifications peuvent être apportées au mode de réalisation décrit par l'emploi de moyens techniques équivalents et il est bien entendu que toutes ces modifications entrent dans le cadre de l'invention.

**Revendications**

1. Dispositif de nettoyage des trous rainurés d'une anode en carbone comprenant une tête de travail (14) formée d'un premier élément constitué par une lame (16) fixée à l'extrémité d'un arbre rotatif (18), d'un second élément (20) monté rotatif sur l'arbre (18) et portant à son extrémité une série d'outils (24), et d'un accouplement (37, 37') entre le premier et second éléments conçu pour permettre une rotation relative desdits éléments seulement lorsque le couple résistant exercé sur le second élément devient supérieur à une valeur prédéterminée, des moyens (54) pour entraîner ledit arbre en rotation et des moyens (64) pour déplacer la tête de travail (14) parallèlement à l'axe du trou, caractérisé en ce que ladite lame (16) est destinée à gratter la surface périphérique et le fond du trou, en ce que le second élément est constitué par une pièce en forme de cloche (20) dont l'extrémité qui porte lesdits outils (24) destinés à gratter les parois des rainures (34) du trou est adjacente à ladite lame (16), de telle sorte que lesdits outils sont situés pratiquement au même niveau que ladite lame, et en ce que ladite pièce en forme de cloche est bloquée axialement sur l'arbre (18), de telle sorte que ladite pièce et ledit arbre sont solidaires en translation axiale.

2. Dispositif selon la revendication 1, caractérisé en ce que ledit accouplement est constitué par deux dentures à dents de scie (37, 37') dont l'une est fixée sur le second élément (20) et l'autre sur une pièce (36) clavetée sur ledit arbre (18) de façon à pouvoir se déplacer longitudinalement sur celui-ci et comporte des ressorts (38) agissant sur ladite pièce (38) dans une direction parallèle à l'axe de l'arbre (18) pour appliquer les dentures l'une sur l'autre.

3. Dispositif selon la revendication 1 ou 2, caractérisé en ce que ledit arbre (18) est creux et ouvert à ses deux extrémités, et son extrémité opposée à l'extrémité portant la lame (16) est reliée à un dispositif d'aspiration.

4. Dispositif selon la revendication 3, caractérisé en ce que l'extrémité de l'arbre (18) portant la lame (16) comporte des ouvertures ou des échancrures facilitant l'aspiration des grains contenus dans le trou (10).

5. Dispositif selon la revendication 3 ou 4, caractérisé en ce qu'il comporte une lame (70) solidaire dudit arbre (18) et coopérant avec une lame (72) solidaire d'un tube fixe (74) disposé à l'intérieur dudit arbre (18) et relié audit dispositif d'aspiration.

6. Dispositif selon la revendication 3, 4 ou 5, caractérisé en ce que ledit second élément (20) est constitué par une cloche entourant l'extrémité de l'arbre portant la lame (16), en ce que lesdits outils (24) sont fixés sur la surface externe de la cloche, près de son bord, et en ce que des orifices sont percés dans la paroi de la cloche au voisinage desdits outils.

7. Dispositif selon l'une quelconque des revendications précédentes, caractérisé en ce que ledit arbre (18) est supporté par des moyens élastiques (53) autorisant des déplacements transversaux de la tête de travail (14).

8. Dispositif selon la revendication 7, caractérisé en ce que ledit arbre (18) est supporté, près de l'extrémité portant la lame (16), par un palier (52) fixé sur un châssis (50) par l'intermédiaire de moyens élastiques (53) et, près de son autre extrémité, par un palier sphérique fixé sur ledit châssis.

9. Dispositif selon l'une quelconque des revendications précédentes, caractérisé en ce qu'il comprend plusieurs têtes de travail (14) et chaque tête de travail est montée sur un châssis (50) déplaçable dans une direction parallèle à l'axe du trou (10), les déplacements desdits châssis étant commandés individuellement par des moteurs tels que des vérins pneumatiques (64).

## Claims

1. Device for cleaning the grooved holes of a carbon anode including a working head (14) made up of a first element consisting of a blade (15) fastened to the end of a rotary shaft (18), of a second element (20) mounted in a rotary way on shaft (18) and whose end is equipped with a series of tools (24), and of a coupling (37, 37') between the first and the second element, designed to allow the said elements to rotate with respect to each other only when the load moment exerted on the second element become higher than a preset value, means (54) to drive the said shaft into rotation and means (64) to move working head (14) parallel to the axis of the hole, characterized in that the said blade (16) is intended to scrap the peripheral surface and the bottom of the hole, in that the second element consists of a bell-shaped part (20) whose end bearing the said tools (24) intended to scrap the walls of the grooves (34) of the hole is adjoining the said blade (16) so that the said tools are practically situated at the same level as the said blade, and in that the said bell-shaped part is axially locked on shaft (18), so that the said part and the said shaft move axially as a single-piece.

2. Device according to claim 1, characterized in that the said coupling consists of two saw-tooth gears (37, 37') one of which is fastened to the second element (20) and the other one to a part (36) keyed on the said shaft (18) so as to be able to move longitudinally on the latter, and includes springs (38) acting on the said part (36) in a direction parallel to the axis of shaft (18) in order to apply the gears on each other.

3. Device according to claim 1 or 2, characterized in that the said shaft (18) is hollow and open at both ends, and in that its end opposite its blade (16) bearing end is connected to a suction device.

4. Device according to claim 3 characterized in that the end of the shaft (18) bearing the blade (16) has openings or recesses which make the suction of the particles contained in hole (10) easier.

5. Device according to claim 3 or 4 characterized in that it includes a blade (70) integral with the said shaft (18) and cooperating with a blade (72) integral with a fixed tube (74) arranged inside the said shaft (18) and connected to the said suction device.

6. Device according to claim 3, 4 or 5, characterized in that the said second element (20) consists of a bell surrounding the shaft end which bears blade (16), in that the said tools (24) are fastened on the outside surface of the bell, near the edge of the same, and in that openings are bored in the bell wall, near the said tools.

7. Device according to any of the above claims, characterized in that the said shaft (18) is supported by flexible means (53) allowing the working head (14) to move crosswise.

8. Device according to claim 7 characterized in that the said shaft (18) is supported, near the blade (16) bearing end, in a bearing (52) fastened to a structure (50) via flexible means (53), and near its other end, in a spherical bearing fastened to the said structure.

9. Device according to any of the above claims, characterized in that it includes several working heads (14), and each working head is mounted on a structure (50) movable in a direction parallel to the axis of the hole (10), the movements of the said structures being controlled individually by motors such as air cylinders (64).

**Patentansprüche**

1. Vorrichtung zum Reinigen der gerillten Löcher einer Kohlenstoffanode, bestehend aus einem Arbeitskopf (14), welcher ein erstes, von einem am Ende einer Drehwelle (18) befestigten Messer (16) gebildetes Element, ein zweites drehbar auf der Welle (18) gelagertes und an seinem Ende eine Reihe von Werkzeugen (24) tragendes Element (20) und eine Kupplung (37, 37') zwischen dem ersten und dem zweiten Element umfasst, deren Auslegung eine relative Drehung besagter Elemente nur zulässt, wenn das auf das zweite Element ausgeübte Widerstandsmoment einen vorbestimmten Wert überschreitet, Mitteln (54) zum Drehantrieb besagter Welle und Mitteln (64) zur Verstellung des Arbeitskopfes (14) parallel zur Mittellinie des Lochs, dadurch gekennzeichnet, dass besagtes Messer (16) dazu bestimmt ist, die Lochumfangsfläche und den Lochboden abzukratzen, dass das zweite Element aus einem glockenförmigen Teil (20) besteht, dessen besagte Werkzeuge (24) zum Abkratzen der Rillenwände (34) des Lochs tragendes Ende an besagtes Messer (16) angrenzt, sodass besagte Werkzeuge praktisch auf derselben Ebene wie besagtes Messer liegen, und dass besagtes glockenförmiges Teil axial zur Welle (18) derart festgesetzt ist, dass besagtes Teil und besagte Welle axialbewegungsschlüssig miteinander verbunden sind.

2. Vorrichtung gemäss Anspruch 1, dadurch gekennzeichnet, dass besagte Kupplung aus zwei Sägezahnverzahnungen (37, 37') besteht, von denen eine auf dem zweiten Element (20) und die andere auf einem auf besagter Welle (18) derart verkeilten Teil (36) befestigt ist, dass es sich in Längsrichtung auf letzterer bewegen kann, und mit Federn (38) versehen ist, welche auf besagtes Teil (36) parallel zur Mittellinie der Welle (18) einwirken, um die Verzahnungen aufeinander zu drücken.

3. Vorrichtung gemäss Anspruch 1 oder 2, dadurch gekennzeichnet, dass besagte Welle (18) hohl und an beiden Enden offen ist, und dass ihr dem das Messer (16) tragenden Ende gegenüberliegendes Ende an eine Absaugvorrichtung angeschlossen ist.

4. Vorrichtung gemäss Anspruch 3, dadurch gekennzeichnet, dass das Ende der Welle (18), welches das Messer (16) trägt, mit Öffnungen oder Ausschnitten versehen ist, welche das Absaugen der in dem Loch (10) befindlichen Körner erleichtert.

5. Vorrichtung gemäss Anspruch 3 oder 4, dadurch gekennzeichnet, dass sie mit einem mit besagter Welle (18) kraftschlüssig verbundenen Messer (70) ausgerüstet ist, welches mit einem Messer (72) zusammenwirkt, das kraftschlüssig mit einem innerhalb besagter Welle (18) angeordneten und an besagte Absaugvorrichtung angeschlossenem ortsfesten Rohr (74) verbunden ist.

6. Vorrichtung gemäss Anspruch 3, 4 oder 5, dadurch gekennzeichnet, dass besagtes zweites Element (20) aus einer Glocke besteht, die das das Messer (16) tragende Wellenende umgibt, dass besagte Werkzeuge (24) auf der Aussenfläche der Glocke in Nähe ihres Randes befestigt sind, und dass die Wand der Glocke in Nähe besagter Werkzeuge mit Löchern versehen ist.

7. Vorrichtung gemäss irgend einem der vorherigen Ansprüche, dadurch gekennzeichnet, dass besagte Welle (18) von elastischen Mitteln (53) gehalten wird, die die Querverstellungen des Arbeitskopfes (14) erlauben.

8. Vorrichtung gemäss Anspruch 7, dadurch gekennzeichnet, dass besagte Welle (18) nahe dem das Messer (16) tragenden Ende in einem mittels elastischer Mittel (53) auf dem Rahmen (50) befestigten Lager (52) aufgenommen wird und nahe dem anderen Ende in einem auf besagten Rahmen befestigten Pendellager.

9. Vorrichtung gemäss irgend einem der vorherigen Ansprüche, dadurch gekennzeichnet, dass sie mehrere Arbeitsköpfe (14) umfasst, und dass jeder Arbeitskopf je auf einem parallel zur Mittellinie des Lochs (10) verstellbarem Rahmen (50) befestigt ist, wobei die Bewegungen besagter Rahmen separat von Antrieben, zum Beispiel Druckluftzylindern (64), betätigt werden.

# FIG. 1

64

42

18

54

48

59

58

50

53

52

14

10

12

60

62

# FIG. 2

FIG.3

FIG.4